Europäisches Patentamt

European Patent Office

Office européen des brevets

(11) Publication number: **0 488 135 A2**

# EUROPEAN PATENT APPLICATION

(21) Application number: **91120098.8**

(22) Date of filing: **26.11.91**

(51) Int. Cl.5: **C08G 61/08**

(30) Priority: **28.11.90 JP 331115/90**

(43) Date of publication of application:
**03.06.92 Bulletin 92/23**

(84) Designated Contracting States:
**AT BE CH DE DK ES FR GB GR IT LI LU NL SE**

(71) Applicant: **NIPPON ZEON CO., LTD.**
**6-1, Marunouchi 2-chome**
**Chiyoda-ku Tokyo 100(JP)**

(72) Inventor: **Okumura, Kin-ichi**
**801-6-143, Kamimachiya**
**Kamakura-shi, Kanagawa(JP)**
Inventor: **Tanimoto, Hirotoshi**
**59-18, Fukaya**
**Ayase-shi, Kanagawa(JP)**
Inventor: **Sugawara, Tomoo**
**481, Miyauchi, Nakahara-ku**
**Kawasaki-shi, Kanagawa(JP)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **Bulk polymerizable reaction solutions.**

(57) An in-mold bulk polymerizable reaction solution comprising at least one norbornene monomer, a metathesis catalyst, an alkoxyalkylaluminum or aryloxyalkylaluminum halide cocatalyst in combination with a titanium or zirconium activating agent gives controlled pot life without adversely affecting the mold surface.

EP 0 488 135 A2

## BACKGROUND OF THE INVENTION

### 1. Technical Field

This invention pertains to a method for producing a norbornene-type polymer. More particularly, this invention relates to the metathesis bulk polymerization in the manufacture of norbornene-type monomers from a reaction solution having pot life controllability and high reactivity. The reaction solution polymerizes to an odorless solid article without contaminating or corroding the mold surfaces.

### 2. State of the Art

Bulk polymerization of norbornene-type monomers such as dicyclopentadiene (DCPD) or methyltetracyclododecene (MTD) in the presence of a metathesis catalyst system (metathesis catalyst and cocatalyst) to obtain a norbornene-type polymer by reaction injection molding (RIM) is well known as disclosed in Japanese Kokai application (Sho) Nos. 58-129013, 59-51911, 61-179214, and 61-293208.

Generally, in metathesis bulk polymerization, at least two reactant solutions, one of which containing a metathesis catalyst and norbornene-type monomer, and the other containing a cocatalyst and norbornene-type monomer, are mixed to form a reaction solution. The reaction solution is conveyed to a mold cavity where metathesis polymerization is carried out until completion (i.e., substantially no residual unreacted monomer remains). Upon mixing the two reactant solutions polymerization commences and the viscosity of the reaction solution increases until passing the point where fluidity is almost lost. The time it takes the system to reach from mixing this point is called pot life. Stated differently, pot life is the time interval between the mixing of the reactants to form the reactive solution to the point where the solution becomes too viscous (e.g., gels) to adequately fill a mold. With the progression of the reaction, heat is rapidly generated and the gel converts to a solid. An exotherm is associated with the rapid polymerization rate causing the unconverted monomer and/or other volatile materials to vaporize. The vaporization of monomer and/or other volatiles gives the system the appearance of smoking. The time interval from mixing the reactants to the point at which the exotherm is attained (e.g., when smoke is produced) is defined as the smoking time. Following the exotherm the polymerization reaction rapidly terminates.

In accordance with the prior art, the two reactant solutions are intimately mixed in an attempt to increase the reaction rate. However, in order to achieve this, the catalytic activity of the catalyst system must be increased. This has its drawbacks in that the mixing may be incomplete leading to localized reactions or during the transfer of the reaction solution to the mold the solution may prematurely solidify. Therefore, large molded articles are difficult to manufacture.

On the other hand, when the catalytic activity of the catalyst system is reduced, mixing of the reactants is easy and the processing and transfer time (pot life) can be extended. However, a large amount of residual unreacted monomer may remain after the termination of the bulk polymerization reaction. The molded article so produced may have an odor, and the physical properties of the article may be low. Moreover, unreacted material adheres to the mold cavity leading to corrosion problems in the mold.

Metathesis catalysts that have been employed in such systems include the halides, oxyhalides, ammonium salts, heteropoly acid salts of molybdenum (Mo) or tungsten (W). If the catalysts are insoluble in norbornene-type monomer, are pretreated so that they will be soluble. Examples of cocatalysts that have been employed include the alkylaluminum halides. However, when combined with the Mo or W catalysts their activity is excessively high leading to unacceptably short pot life formulations. Even at room temperature, bulk polymerization progresses prematurely, leading to polymer formation in the mixing zone.

Early attempts to extend formulation pot life and to prevent premature polymerization have led to the modification of the catalyst system. The addition of a cocatalyst controlling agent has been suggested, such as ethers, esters, ketones, nitriles, etc. as disclosed in Japanese Kokobi application (Sho) Nos. 59-51911, 58-12013, 61-120814, 61-179214. However, pot life control is insufficient with these prior art methods and the operation is rather difficult.

Alkoxyalkylaluminum halides or aryloxyalkyl aluminum halides are excellent cocatalysts for controlling pot life as disclosed in Japanese Application (Sho) No. 59-51911. In order to increase the catalytic activity of this system, it has been proposed to add the halides of Si, Ge, Sn, Mg, Sb, or B as activating agents for higher monomer/conversion as set forth in Japanese Kokai Application (Sho) No.63-186730. Silicon tetrachloride, for example, ($SiCl_4$) is disclosed as an effective monomer conversion enhancer, however it can corrode the surfaces of metal molds, which is a major disadvantage. Moreover, these activating agents may lose their activity upon exposure to the moisture and oxygen in the air, leading to a product surface that does not cure sufficiently.

The addition of a Lewis acid such as B, A1, Ti, Bi, Zr, Sn, etc. to improve the activity of a catalyst system consisting of metal halide metathesis catalysts, tungsten halides such as $WCl_6$ or $WOCl_4$, and organoaluminum compounds or organotin compounds as disclosed in Japanese (Kokai Applications (HEI) No. 2-129221 (U.S. Patent No. 4,825,430). However, these catalyst systems have short pot lives and they are not suitable for the manufacture of large molded products. Accordingly, there is a need for a catalyst system having pot life controllability that provides for high monomer conversion without the mold corrosion problems of the prior art.

**SUMMARY OF THE INVENTION**

The primary object of this invention is to provide a method for making heat-resistant norbornene-type polymeric articles having attractive finishes.

It is another object of this invention to provide a reactive formulation wherein pot life can be controlled and from which large size molded products can be manufactured.

It is a further object of this invention to provide a Norbornene-type monomer formulation that has high reactivity, and upon polymerization, is low in residual monomer content.

Another object of this invention is to significantly reduce adhesion of unreacted reactants on the mold cavity surface and to suppress corrosion of metal molds.

These and other objects are achieved by a monomer formulation comprising a molybdenum or tungsten containing catalyst, an alkoxyalkylaluminum or aryloxyalkylaluminum cocatalyst and an activating agent selected from a titanium or zirconium compound. Such formulation has improved pot life controllability, high reactivity and does not adhere to or corrode the mold cavity surfaces of metal molds.

**DETAILED DESCRIPTION**

Monomer

In this invention, a norbornene-type monomer having three or more rings is used to obtain a strong polymer with a high thermal deformation temperature. Examples of suitable norbornene-type monomers with three or more rings include tricyclic monomers such as dicyclopentadiene or dihydrodicyclopentadiene and the like; tetracyclic monomers such as tetracyclododecene, methyltetracyclododecene, ethyltetracyclododecene, dimethyltetracyclododecene, ethylidenetetracyclododecene, phenyltetracyclododecene and the like; pentacyclic monomers such as tricyclopentadiene and the like; and heptacyclic monomers such as tetracyclopentadiene and the like. Polar and non-polar substituents can be present on the side chain or on the ring. Examples of polar substituents are cyano, ester, ether, pyridyl, halo, and the like. Non-polar substituents can be selected from alkyl radicals, and the like. Based on availability, reactivity, and heat resistance, tricyclic to pentacyclic monomers are preferred. The norbornene-type monomers of the present invention can be used alone if homopolymer products are desired or in combination of two or more if copolymer products are desired.

Providing that the properties of the polymeric articles prepared by the method of the present invention are not deleteriously affected, the foregoing norbornene-type monomers can be mixed with at least one of the following monomer types selected from bicyclic norbornene monomers such as 2-norbornene, norbornadiene, 5-methyl-2-norbornene, 5-ethyl-2-norbornene, 5-butyl-2-norbornene, 5-hexyl-2-norbornene, 5-vinyl-2-norbornene, 5-ethylidene-2-norbornene, 5-phenylnorbornene, 5-chloro-2-norbornene, 5-cyano-2-norbornene, 5-methoxycarbonyl-2-norbornene.

Monocyclolefins such as cyclobutene, cyclopentene, cyclopentadiene, cyclooctene, and cyclododecene and the like can be mixed with the foregoing monomers so long as the properties of the resulting polymer are not impaired.

**CATALYST SYSTEM**

Any molybdenum or tungsten compound which is soluble in monomer can be used as metathesis catalyst. The preferred metathesis catalysts are the organic ammonium salts of molybdenum or tungsten which are disclosed in Japanese Kokai Application (Sho) 59-51911. Examples of molybdenum based metathesis catalysts are tridecylammonium molybdate, methyltricaprylammonium molybdate, tri(tridecyl)ammonium molybdate, trioctylammonium molybdate, and the like. Examples of tungsten based metathesis catalysts are tridecylammonium tungstate, methyltricaprylammonium tungstate, tri(tridecyl)ammonium tungstate, trioctylammonium tungstate, and the like.

3

Other suitable metathesis catalysts include the halides or oxyhalides of molybdenum and tungsten. However, to be useful they must be modified with phenol or alcohol, or chelated to render them soluble in monomer.

The cocatalyst component of the present invention is selected from alkoxyalkylaluminum halides and/or aryloxyalkylaluminum halides which are disclosed in detail in Japanese Kokai Application (Sho) No. 51911. The general formula for these cocatalysts is as follows:

$(RO)_a R^1_b A1 X_c$.

wherein R is alkyl, phenyl, or substituted phenyl containing 1-18 carbon atoms, preferably 2-8 carbon atoms; $R^1$ is an alkyl group containing 1-18 carbon atoms, preferably 2-8 carbon atoms; X is a halogen selected from chlorine, iodine, bromine, or fluorine, preferably a chloride or iodine; a is the number of equivalents of the alkoxy or aryloxy moiety (RO) and can vary from a minimum of approximately 0.5 to a maximum of approximately 2.5, preferably from approximately 0.7 to approximately 1.5; by is the number of equivalents of the alkyl group ($R^1$) and can vary from a minimum of approximately 0.3 to a maximum of approximately 2, preferably from approximately 0.5 to approximately 1.3; c is the number of equivalents of halogen atom (X) and can vary from a minimum of approximately 0.5 to a maximum of approximately 2, preferably from approximately 0.7 to approximately 1.3; and wherein the sum of a, b, and c is 3.0.

Preferably R is a methyl, ethyl, propyl, n-butyl, t-butyl, pentyl, amyl, hexyl, octyl, phenyl, or tolyl group, and the like. Preferably $R^1$ is selected from the alkyl group(s) mentioned above.

Optionally, an alkylaluminum halide may be reacted with an alcohol in situ to introduce the alkoxyalkylaluminum halide to the reaction system. Additionally, ethers, esters, ketones and nitriles can be used in conjunction with the alcohol.

The amount of metathesis catalyst used per mole of monomer is about 0.01 to about 50 mmoles, preferably 0.1 to about 20 mmoles. The cocatalyst to catalyst ratio is about 0.1 to about 200 (mole ratio), preferably about 1 to about 10 (mole ratio).

## Activating Agent

It is well known that titanium or zirconium halides react in air and generate hydrogen chloride fumes, which strongly corrode metal. Surprisingly and unexpectedly when utilized in a dilute norbornene-type monomer solution, fumes are not generated and corrosivity is not observed. While not wishing to be bound by a particular theory of invention, it is believed that titanium and zirconium halides form a weak complex with a norbornene-type monomer such a dicyclopentadiene, and their reactivity toward water is decreased. Thus, it does not react readily with moisture in the air.

Any titanium or zirconium compounds that are soluble in the monomer are suitable for the compositions of this invention. Examples are $TiC1_4$, $TiC1_3$, $TiBr_4$, $TiI_4$, $TiF_4$, $TiC1_2(OBu)_2$, titanium butoxide, $TiH_4$, bis-(cyclopentadienyl) titanium dichloride, $ZrC1_4$, $ZrF_4$, zirconium butoxide, and the like. Among these, halogen containing compounds are preferred. Providing that the purpose of the invention is not adversely affected, those compounds may be used with silicon halide activators. The amount of activating agent with respect to the catalyst component is about 0.1 to about 100 (mole ratio), preferably about 0.5 to about 10 (mole ratio) range.

It is preferred that the metathesis catalyst, cocatalyst, and activating agent are soluble in the monomer. Alternately they may be dissolved or suspended in a small amount of inert solvent, providing that the product is not adversely affected.

## Polymerization

In the method of the present invention, the bulk polymerization of norbornene-type monomers in the presence of the metathesis catalyst system and activator is carried out in a mold. A small amount of inert solvent may be present in the formulation so long as the solvent does not adversely affect the polymerization reaction or polymer product produced therefrom.

A preferred bulk ring-opening polymerization method is to divide a norbornene-type monomer solution into two portions and to store them in separate containers. Into one container, the metathesis catalyst is added to form one reactant solution and into the other, the cocatalyst is added to form the other reactant solution. The activating agent is preferably added to the cocatalyst reactant solution, but it also can be added to either container or to both containers. The two reactant solutions are then mixed and injected into a mold and the bulk ring-opening polymerization is carried out in the mold cavity.

There are no restrictions as to the composition of the mold because the problem of metal mold corrosion does not exist. Molds made of resin, wood, steel or aluminum can all be used safely.

The two reactant solutions are mixed by using a convention reaction injection molding (RIM) apparatus. In this case the two reactant solutions are stored in two separate vessels and serve as the source for the two reactant feed streams. The two streams are intimately mixed in the mixing head of the RIM apparatus (impingement mixing head) to form the reaction solution. The mixture is injected into a preheated metal mold and bulk polymerized to produce a molded product.

Optionally, after mixing the two reactant solutions, the mixture can be conveyed (poured or injected) into a mold in several portions (batch feeding) as taught in Japanese Kokai Application (Sho) No. 59-51911 (U.S. Patent No. 4,426,502). Alternatively the solution reaction can be injected in a continuous mode. With this method, the apparatus is smaller in comparison to an impingement type mixing apparatus allowing the process to be carried out at lower operating pressures. When a large amount of glass fiber reinforcement is utilized within the mold, the injection of reaction solution may be carried out at a low injection speed to allow the solution to homogeneously infiltrate the glass fibers.

This invention is not limited to a two reactant stream process. A third reactant stream (or a plurality of streams) containing an additional reactant(s) or additive(s) can be employed in the present process.

The mold temperature employed is commonly greater than room temperature, preferably between about 40 to 200°C, and more preferably between about 50 to 120°C. The clamping pressure is commonly between about 0.1 to 100 kg/cm².

The polymerization time can be determined as needed. However, the time from feeding the reactive solution into the mold cavity to the onset of the smoking time preferably should be within five minutes, and preferably within two minutes.

The reactant solutions are stored under an inert gas atmosphere such as nitrogen, and also should be processed under such an inert atmosphere. However, the mold does not necessarily have to contain an inert gas.

**Additives**

In this invention, a reinforcing material may be placed in the mold cavity and then the reaction solution is fed into the cavity and allowed to polymerize in the presence of the reinforcing material. Examples of suitable reinforcing materials are glass fibers, aramid fibers, carbon fibers, ultrahigh molecular weight polyethylene fibers, metal fibers, polypropylene fibers, aluminum coated glass fibers, cotton, acrylic resin fibers, boron fibers, silicon carbide fibers, alumina fibers, and the like. Additionally, potassium titanate or calcium sulfate whiskers may also be used. The reinforcing agents can be in the form of long fibers, chopped strand type mat, fabric, chopped fiber, or many other forms suitable for providing reinforcement. The surface of these reinforcing materials can be treated with a silane coupling agent to improve their adhesion to the resin. There are no restrictions to the amount of reinforcing material utilized, but it is commonly not less than about 20 weight percent, preferably between about 30 to 70 weight percent.

Additionally, antioxidants, fillers, pigments, coloring agents, foaming agents, flame retardants, lubricating agents, elastomers, dicyclopentadiene thermopolymerization resins and their hydrogenated compounds may be added to improve the polymer characteristics and properties.

Suitable antioxidants include any antioxidant for plastics and rubber such as a phenol, phosphorus, or amine based antioxidant.

Suitable fillers include milled glass, carbon black, talc, calcium carbonate, mica, and the like.

Suitable elastomers include natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer (EPDM), vinyl ethylene acetates copolymer (EVA), and their hydrogenated derivatives.

The foregoing additives are commonly added to one or both of the reaction solutions.

The invention will be discussed in more detail by the following and are not intended to serve as a limitation on the scope thereof. As used in the examples and throughout the specification all parts, ratios, and percents are based on weight, unless otherwise indicated.

**Example 1**

Equal portions of a mixture of 90 parts of DCPD (99.3% purity) containing 1000 ppm 2,6-di-t-butyl-4-hydroxytoluene (BHT) antioxidant and 10 parts of tricyclopentadiene (TCP) (96.1% purity) were added, per 100 parts of monomer to give concentrations of 23 mmoles/L, respectively. The vessel was allowed to stand overnight to let the DEAC and alcohol react thoroughly.

The various activating agents in the amounts shown in Table 1 were subsequently added to the reactant solutions.

A nitrogen atmosphere was charged into one of the vessels which was then sealed. The vessel was allowed to stand overnight (about 16 hours) at 60°C. The reactant solution was observed for viscosity changes and the formation of a precipitate to evaluate the solution for stability. Results are reported in Table I.

In the remaining vessel (kept at 35°C), tri(dodecyl)ammonium molybdate was added to give a 6 mmole/L concentration. The contents were then vigorously shaken to ensure intimate mixing. The pot life (PL) and smoking time (SMT) of the reaction solution were then determined and are reported in Table I.

The time interval from mixing to when the reaction solution became pudding-like was determined to be the PL. The time interval from mixing to when the curing resin surface generated smoke was determined to be the SMT. These operations were carried out under a nitrogen atmosphere.

After polymerization, the polymer-containing vessel was cooled to room temperature and the polymer was retrieved (by breaking the vessel). The glass transition temperature (Tg) and the conversion of monomer were determined. The Tg was measured by scanning differential calorimeter. The conversion rate was determined by thermogravimetric analysis (under a nitrogen atmosphere) from room temperature to 400°C at a temperature rate of 20°C/min. and then the sample was weighed to determine the conversion rate.

The corrosion effect on metal molds was determined as follows. The activating agents shown in Table 1 were added to separate vessels containing a 90:10 ratio of DCPD to TCP monomer mixture to form a 0.1 mole/L concentration of activating agent in monomer. A carbon steel (SS-41) coupon was immersed halfway into the monomer mixture, allowing the upper half of the coupon to be exposed to air. The monomer mixtures with immersed coupons were allowed to stand for four days at room temperature. The surface appearance of the carbon steel coupons were then observed to determine degree of corrosion.

For comparison, tri(dodecyl)ammonium molybdate, DEAC, and $WOCl_4$ were added to separate vessels containing the same monomer ratio and in the same concentration as above. Carbon steel coupons were immersed in each vessel and tested as above for corrosion. No rust was observed when tri(dodecyl)-ammonium molybdate was added and an insignificant amount of rust was observed when DEAC was added. But a considerable amount of rust was formed when $WOCl_4$ was added.

**TABLE 1**

| Experiment | Examples | | | | | Comparison Examples | | |
|---|---|---|---|---|---|---|---|---|
| | A | B | C | D | E | F | G | H |
| Activating agent (mmole/L) | TiCl$_4$ | TiBr$_4$ | TiCl$_2$(OBu)$_2$ | ZrCl$_4$ | - | SiCl$_4$ | SnCl$_4$ | AlCl$_3$ |
| | 5 | 5 | 5 | 10 | - | 10 | 10 | 10 |
| Polymerization Rating — PL (second) | 10 | 15 | 15 | 26 | 35 | 10 | 15 | 27 |
| Polymerization Rating — SMT (second) | 40 | 60 | 70 | 110 | 310 | 60 | 330 | 360 |
| Polymerization Rating — Tg (°C) | 161 | 159 | 156 | 143 | 55 | 160 | 138 | 82 |
| Polymerization Rating — Conversion rate (%) | 98.9 | 99.0 | 97.5 | 96.6 | 79.3 | 98.9 | 95.9 | 87.9 |
| Solution stability test | Viscosity slightly increased | Stable | Slightly precipitated | Stable | Stable | Stable | Large amount of polymer formed | Large amount of polymer formed |
| Corrosiveness evaluation | Slight red rust | Almost none | Almost none | Slight red rust | | Large amount of rust formed on entire surface | Large amount of rust formed on entire surface | Large amount of rust formed on entire surface |

As the data in Table 1 demonstrates, Ti and Zr compounds had high polymerization activities (i.e. conversion rates). The conversion rates were similar to that of SiCl$_4$ and were more active than SnCl$_4$ or AlCl$_3$.

SiCl$_4$ was highly corrosive and Ti and Zr compounds had low corrosion properties.

**Example 2**

The amount of n-propanol added in Example 1-A was increased from a concentration of 23 mmole/L to a concentration of 30 mmole/L in omer and tested according to the same procedure.

The results were:

PL: 65 seconds

SMT: 410 seconds

Tg: 156°C

Conversion rate: 98.5%

As demonstrated, pot life can be extended making it possible to mold large parts.

**Example 3**

To 100 parts of a monomer mixture consisting of 90 parts DCPD (99.3% purity) and 10 parts TCP (96.1% purity) containing 1000 ppm BHT, the following components were added:

(1) 7 parts styrene-isoprene-styrene block copolymer (SIS: Nippon Zeon Co., Quintac 3421); and

(2) 2 parts polybutadiene (Nippon Zeon Co., BR-1220).

The resulting mixture was divided into two equal portions, and n-propoxyethylaluminum chloride, n-propanol, and titanium tetrachloride were added to one portion, to give 46, 5, and 7 mmole/L concentrations, respectively. The solution was mixed thoroughly and designated as solution A.

In the other portion, 4 parts BHT and tri(dodecyl) ammonium molybdate were added and thoroughly mixed and designated as solution B. The concentration of molybdate catalyst in monomer was 12 mmole/L.

Solutions A and B were fed individually into a power mixer by gear pumps at a 1:1 ratio, and then rapidly injected into a preheated aluminum mold preheated to 50°C. The mold cavity was 300 mm x 300 mm x 3 mm. The injection time was about 20 seconds and the reaction proceeded for two minutes. The entire operation was carried out under nitrogen atmosphere.

The molded product obtained (flat plate) had the following properties:

Tg: 145°C

Thermal deformation temperature: 125°C

Izod impact strength: 44 kg-cm/cm$^2$ (23°C)

Bending strength: 7.6 kg/mm$^2$

Modulus of elasticity of bending: 190 kg/mm$^2$ (23°C)

Conversion rate: 96.4%

Thermal deformation was tested according to JIS K-6911 under an 18.5 kg/cm$^2$ load.

The conversion rate of 96.4% was high and there was no odor from unreacted monomer. The molded product surface had no smudges and contamination of the mold was not observed.

For comparison the titanium tetrachloride in Example 3 was replaced with 10 mmoles/L of silicon tetrachloride (concentration of SiCl$_4$ in monomer) and conducted according to the procedure of Example 3. The properties of the molded plate are listed below.

Tg: 143°C

Thermal deformation temperature: 120°C

Izod impact strength: 40 kg-cm/cm$^2$ (23°C)

Bending strength: 6.6 kg/mm$^2$

Modulus of elasticity of bending: 180 kg/mm$^2$ (23°C)

Conversion rate: 95.2%

On the edges of the product, a faint odor of unreacted monomer was detected, some smudges were observed on the surface of the product and at the edges (where the contact with air was prolonged). Mold contamination (with unreacted monomer) of die was observed on the part corresponding to the smudged spots on the product.

**Claims**

1.  An in-mold bulk polymerizable reaction solution comprising at least one norbornene-type monomer, a metathesis catalyst, a cocatalyst selected from the group consisting of alkoxyalkylaluminum halides, aryloxyalkylaluminum halides, and mixtures thereof, and an activating agent selected from titanium or zirconium compounds.

2.  The reaction solution of claim 1 wherein said solution comprises a mixture of at least two reactant solutions, one of which includes at least one norbornene-type monomer and the metathesis catalyst, another of which includes at least one norbornene monomer, the cocatalyst, and the activating agent.

3. The reaction solution of claim 1 wherein the metathesis catalyst is selected from the group consisting of organic ammonium salts of molybdenum, tungsten, and mixtures thereof.

4. The reaction solution of claim 3 wherein the metathesis catalyst is selected from the group consisting of tridecylammonium molybdate, methyltricaprylammonium molybdate, tri(tridecyl)ammonium molybdate, trioctylammonium molybdate, tridecylammonium tungstate, methyltricaprylammonium tungstate, tri(tridecyl)ammonium tungstate, trioctylammonium tungstate, and mixtures thereof.

5. The reaction solution of claim 1 wherein the cocatalyst is selected from compounds of the formula:

$$(RO)_a R^1_b AlX_c$$

wherein R is alkyl, phenyl, or substituted phenyl containing 1-18 carbon atoms; $R^1$ is an alkyl group containing 1-18 carbon atoms; X is a halogen selected from chlorine, iodine, bromine, or fluorine; a is the number of equivalents of the alkoxy or aryloxy moiety (RO) and varies from about 0.5 to about 2.5; b is the number of equivalents of the alkyl group ($R^1$) and varies from about 0.3 to about 2; c is the number of equivalents of halogen atom (X) and varies from about 0.5 to about 2; and wherein the sum of a, b, and c is about 3.0.

6. The reaction solution of claim 1 wherein the activating agent is selected from the group consisting of $TiCl_4$, $TiCl_3$, $TiBr_4$, $TiI_4$, $TiF_4$, $TiCl_2(OBu)_2$, titanium butoxide, $TiH_4$, bis (cyclopentadienyl) titanium dichloride, $ZrCl_4$, $ZrF_4$, zirconium butoxide, and mixtures thereof.

7. The reaction solution of claim 1 wherein the norbornene-type monomer is selected from the group consisting of dicyclopentadiene, dihydrodicyclopentadiene, tetracyclododecene, methyltetracyclododecene, ethyltetracyclododecene, dimethyltetracyclododecene, phenyltetracyclododecene, tricyclopentadiene tetracyclopentadiene, and mixtures thereof.

8. The reaction solution of claim 7 wherein the solution further comprises an effective amount of a monomer selected from the group consisting of 2-norbornene, norbornadiene, 5-methyl-2-norbornene, 5-ethyl-2-norbornene, 5-butyl-2-norbornene, 5-hexyl-2-norbornene, 5-vinyl-2-norbornene, 5-ethylidene-2-norbornene, 5-phenylnorbornene, 5-chloro-2-norbornene, 5-cyano-2-norbornene, 5-methoxycarbonyl-2-norbornene, cyclobutene, cyclopentene, cyclopentadiene, cyclooctene, cyclododecene, and mixtures thereof.

9. The reaction solution of claim 1 wherein the amount of catalyst per mole of monomer ranges from about 0.01 to about 50 mmoles.

10. The reaction solution of claim 9 wherein the amount of cocatalyst relative to the catalyst component is present from about 0.1 to about 200 mole ratio range.

11. The reaction solution of claim 10 wherein the amount of activating agent relative to the catalyst component is present from about 0.1 to about 100 mole ratio range.

12. A method for the in-mold bulk polymerization of a metathesis polymerizable composition comprising feeding a reaction solution into a mold and polymerizing the reaction solution under effective metathesis polymerization conditions wherein said reaction solution comprises at least one norbornene-type monomer, a metathesis catalyst, a cocatalyst selected from the group consisting of alkoxyalkylaluminum halides, aryloxyalkylaluminum halides, and mixtures thereof, and an activating agent selected from titanium or zirconium compounds.

13. The method of claim 12 wherein said reaction solution comprises a mixture of at least two reactant solutions, one of which includes at least one norbornene-type monomer and the metathesis catalyst, another of which includes at least one norbornene monomer, the cocatalyst, and the activating agent.

**14.** The method of claim 12 wherein the metathesis catalyst is selected from the group consisting of organic ammonium salts of molybdenum, tungsten, and mixtures thereof.

**15.** The method of claim 14 wherein the metathesis catalyst is selected from the group consisting of tridecylammonium molybdate, methyltricaprylammonium molybdate, tri(tridecyl)ammonium molybdate, trioctylammonium molybdate, tridecylammonium tungstate, methyltricaprylammonium tungstate, tri-(tridecyl)ammonium tungstate, trioctylammonium tungstate, and mixtures thereof.

**16.** The method of claim 12 wherein the cocatalyst is selected from compounds of the formula:

$(RO)_a R^1_b AlX_c$

wherein R is alkyl, phenyl, or substituted phenyl containing 1-18 carbon atoms; $R^1$ is an alkyl group containing 1-18 carbon atoms; X is a halogen selected from chlorine, iodine, bromine, or fluorine; a is the number of equivalents of the alkoxy or aryloxy moiety (RO) and varies from about 0.5 to about 2.5; b is the number of equivalents of the alkyl group ($R^1$) and varies from about 0.3 to about 2; c is the number of equivalents of halogen atom (X) and varies from about 0.5 to about 2; and wherein the sum of a, b, and c is about 3.0.

**17.** The method of claim 12 wherein the activating agent is selected from the group consisting of $TiCl_4$, $TiCl_3$, $TiBr_4$, $TiI_4$, $TiF_4$, $TiCl_2(OBu)_2$ titanium butoxide, $TiH_4$ bis (cyclopentadienyl) titanium dichloride, $ZrCl_4$, $ZrF_4$, zirconium butoxide, and mixtures thereof.

**18.** The method of claim 12 wherein the norbornene-type monomer is selected from the group consisting of dicyclopentadiene, dihydrodicyclopentadiene, tetracyclododecene, methyltetracyclododecene, ethyltetracyclododecene, dimethyltetracyclododecene, phenyltetracyclododecene, tricyclopentadiene tetracyclopentadiene, and mixtures thereof.

**19.** The method of claim 18 wherein the solution further comprises an effective amount of a monomer selected from the group consisting of 2-norbornene, norbornadiene, 5-methyl-2-norbornene, 5-ethyl-2-norbornene, 5-butyl-2-norbornene, 5-hexyl-2-norbornene, 5-vinyl-2-norbornene, 5-ethylidene-2-norbornene, 5-phenylnorbornene, 5-chloro-2-norbornene, 5-cyano-2-norbornene, 5-methoxycarbonyl-2-norbornene, cyclobutene, cyclopentene, cyclopentadiene, cyclooctene, cyclododecene, and mixtures thereof.

**20.** The method of claim 12 wherein the amount of catalyst per mole of monomer ranges from about 0.01 to about 50 mmoles.

**21.** The method of claim 20 wherein the amount of cocatalyst relative to the catalyst component is present from about 0.1 to about 200 mole ratio range.

**22.** The method of claim 21 wherein the amount of activating agent relative to the catalyst component is present from about 0.1 to about 100 mole ratio range.